Europäisches Patentamt

European Patent Office

Office européen des brevets

(19)

(11) Veröffentlichungsnummer : **0 352 502 B1**

(12) # EUROPÄISCHE PATENTSCHRIFT

(45) Veröffentlichungstag der Patentschrift :
**08.07.92 Patentblatt 92/28**

(51) Int. Cl.⁵ : **F16D 65/12**

(21) Anmeldenummer : **89112027.1**

(22) Anmeldetag : **01.07.89**

(54) Bremsscheibe für Scheibenbremsen.

(30) Priorität : **08.07.88 DE 3823148**

(43) Veröffentlichungstag der Anmeldung :
**31.01.90 Patentblatt 90/05**

(45) Bekanntmachung des Hinweises auf die
Patenterteilung :
**08.07.92 Patentblatt 92/28**

(84) Benannte Vertragsstaaten :
**AT BE DE ES FR GB IT NL SE**

(56) Entgegenhaltungen :
**DE-A- 2 527 649**
**DE-A- 2 539 361**
**DE-A- 2 728 335**
**DE-A- 3 603 547**
**DE-B- 2 033 033**
**GB-A- 2 107 012**

(73) Patentinhaber : **Schwäbische Hüttenwerke
Gesellschaft mit beschränkter Haftung
Wilhelmstrasse 67 Postfach 3280
W-7080 Aalen-Wasseralfingen (DE)**

(72) Erfinder : **Metzler, Horst
Am Eichbühl 27
W-7200 Tuttlingen (DE)**
Erfinder : **Schwarz, Günther
Galgenweg 14
W-7200 Tuttlingen 16 (DE)**

(74) Vertreter : **Jackisch, Walter, Dipl.-Ing. et al
Patentanwalt W. Jackisch & Partner
Menzelstrasse 40
W-7000 Stuttgart 1 (DE)**

EP 0 352 502 B1

## Beschreibung

Die Erfindung bezieht sich auf eine Bremsscheibe für Scheibenbremsen, insbesondere für Kraftfahrzeuge, der im Oberbegriff des Patentanspruches 1 angegebenen Gattung.

Bei einer aus der DE-C-2557 649 bekannten Bremsscheibe sind der Innentopf und die Reibscheibe als separate Gußteile hergestellt. Die Reibscheibe wird auf dem Innentopf von einer Vielzahl von Rippen getragen, die in entsprechende Vertiefungen des Innentopfes eingelassen sind und auf deren radial außen liegenden Enden die Reibscheibe formschlüssig befestigt ist. Damit die Rippen nicht einzeln eingesetzt werden müssen, ist bereits vorgeschlagen worden, die Rippen untereinander als Rippenkranz zu verbinden.

Es ist die Aufgabe der vorliegenden Erfindung, eine Bremsscheibe der gattungsgemäßen Art zu schaffen, die der unterschiedlichen Beanspruchung des Innentopfes und des Scheibenkranzes besser entspricht und die auf einfachere Weise herstellbar ist.

Diese Aufgabe wird bei einer Bremsscheibe der genannten Art durch die kennzeichnenden Merkmale des Anspruches 1 gelöst.

Die wesentlichen Vorteile des Erfindungsgegenstandes sind darin zu sehen, daß der Innentopf, der selbst bei großer Einwirkung von mechanischer und thermischer Belastung formstabil sein sollte, aus einem Material mit hoher Zugfestigkeit besteht. Demgegenüber ist der Scheibenkranz aus einem Material mit geringerer Zugfestigkeit hergestellt, da derartige Gußwerkstoffe mit geringerer Zugfestigkeit einen relativ großen Anteil von freiem Graphit aufweisen und dadurch thermisch beständig gegen Brandrisse und Spannungen sind. Die geringere Festigkeit in dem Scheibenkranz wird durch die hohe Zugfestigkeit des Innentopfes, insbesondere durch die Herstellung im Verbundguß, wieder kompensiert. Durch Verbundgießen ist die Bremsscheibe auf einfache Weise herstellbar, denn der aus einem hochfesten Material gegossene Innenteil wird für das Gießen der Scheibe auf einen eingelegten Kern gesteckt, und dann wird die Form mit dem Material für den Scheibenkranz gefüllt, wobei das Material des Scheibenkranzes seitlich an den Rippen vorbeifließt und hinter eine radial innen liegende Kante der Rippen oder in Öffnungen in den Rippen gelangt. Auf diese Weise erfolgt das in radialer Richtung formschlüssige Umgreifen bzw. Durchgreifen der Rippen vom Material des Scheibenkranzes.

Als besonders geeignetes Material für den Innentopf hat sich Grauguß mit einer Zugfestigkeit von mindestens 250 N/mm² (GG25) oder Grauguß mit einer Zugfestigkeit von 300 N/mm² (GG30) erwiesen. Für besonders hohe Beanspruchungen kann der Innentopf auch aus Grauguß mit Kugelgraphit mit einer Zugfestigkeit von mindestens 400 N/mm² (GGG40) bestehen. Für den Scheibenkranz, der durch das Zusammenwirken mit den Reibbelägen insbesondere einer großen thermischen Belastung ausgesetzt ist, soll das Material ein Grauguß mit hohem Kohlenstoffanteil sein. Als Material für den Scheibenkranz wird daher Grauguß mit einer Zugfestigkeit von 100 oder 150 N/mm² (GG10 oder GG15) vorgeschlagen. Anstelle von Grauguß für den Innentopf ist aber auch ein im pulvermetallurgischen Verfahren hergestelltes Sintermetall geeignet.

Gemäß einer bevorzugten Ausgestaltung des Erfindungsgegenstandes umfaßt die Bremsscheibe in an sich bekannter Weise zwei Reibringe, die über eine Vielzahl in axialer Richtung verlaufender Stege verbunden sind. Ein solcher Scheibenkranz bietet die Möglichkeit, daß die Rippen des Innentopfes in die Schlitze zwischen den sich gegenüberliegenden Reibringen ragen. Eine erste Ausführungsform eines durch Verbundgießen auf den Rippen des Innentopfes befestigten Scheibenkranzes besteht darin, daß ein Reibring des Scheibenkranzes die Rippen umgreift und der andere Reibring radial nach innen auf dem Innentopf abgestützt ist. Bei einer solchen Ausführung ist es zweckmäßig, den Reibring, der sich auf dem Innentopf abstützt, mit radial nach innen gerichteten Wölbungen zu versehen, die zwischen zwei benachbarten Rippen liegen und in entsprechende Vertiefungen am Innentopf eingreifen. Mit dieser Anordnung sind große Drehmomente übertragbar.

Eine alternative Ausführung besteht darin, daß beide Reibringe die Rippen umgreifen. Die Anzahl der Rippen, die sich am äußeren Umfang des Innentopfes befinden und durch das Verbundgießen in dem Scheibenkranz verankert sind, kann nach den Erfordernissen, die an die Bremsscheibe gestellt werden, festgelegt sein. Eine Anzahl von zwanzig Rippen, die über den Kreisumfang gleichmäßig verteilt angeordnet sind, hat sich als günstig erwiesen.

Gemäß einer alternativen Ausführungsform sind die Rippen mit achsparallelen Öffnungen versehen, in die beim Gießen des Scheibenkranzes das Material fließt, so daß Verankerungsstege gebildet sind, die die Rippen durchgreifen.

Die erfindungsgemäße Bremsscheibe für Scheibenbremsen ist nachstehend anhand der Zeichnungen näher erläutert. In der Zeichnung zeigt:

Fig. 1 einen radialen Schnitt durch eine erste Ausführungsform der erfindungsgemäßen Bremsscheibe,
Fig. 2 einen Schnitt längs der Linie II-II in Fig. 1,
Fig. 3 einen Schnitt längs der Linie III-III in Fig. 2,
Fig. 4 einen radialen Schnitt durch eine zweite Ausführungsform der erfindungsgemäßen Bremsscheibe,
Fig. 5 einen Schnitt längs der Linie V-V in Fig. 4,

Fig. 6 eine alternative Ausführungsform zu Fig. 4,

Fig. 7 einen Schnitt längs der Linie VII-VII in Fig. 6.

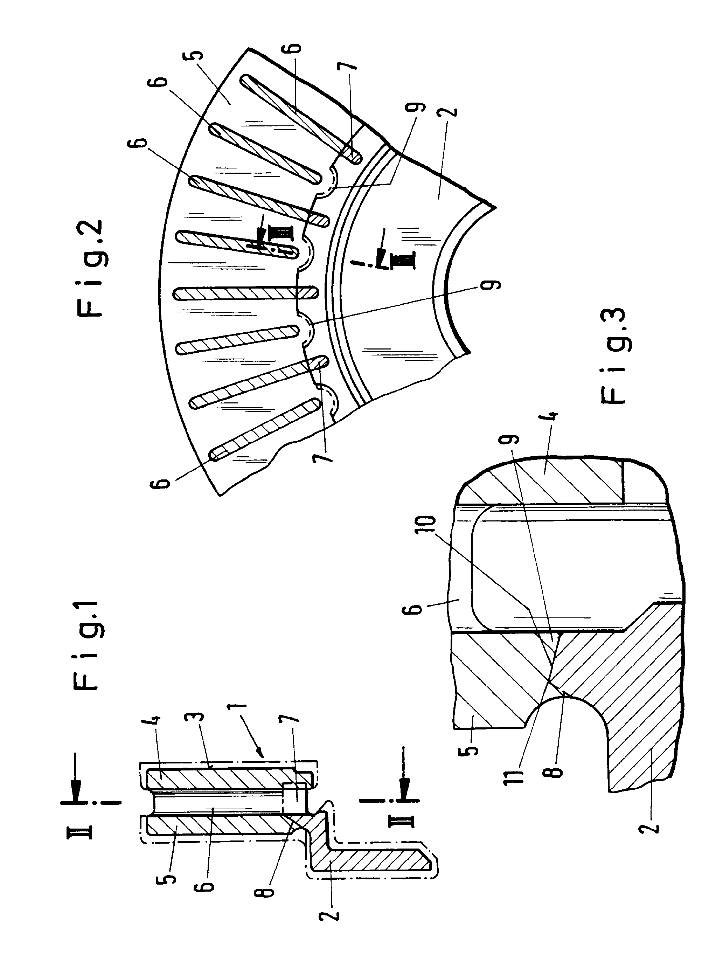

In Fig. 1 ist eine Bremsscheibe 1 im radialen Schnitt dargestellt, die aus zwei Teilen, nämlich einem Innentopf 2 und einem Scheibenkranz 3, besteht. Der Scheibenkranz 3 umfaßt zwei Reibringe 4 und 5, die über eine Vielzahl von sich zwischen diesen erstreckenden Stegen 6 miteinander verbunden sind. Am Außenumfang des Innentopfes 2 sind Rippen 7 angeformt, die in den radial innen liegenden Bereich des Scheibenkranzes 3 ragen. Der Reibring 4 umgreift die Rippen 7, so daß der Scheibenkranz 3 in beiden radialen Richtungen auf den Rippen 7 fixiert ist. Der Reibring 5 ist mit einer schrägen Fläche 8 an einer entsprechend gestalteten Fläche des Innentopfes 2 abgestützt.

Der Innentopf 2 wird mit den an seinem Außenumfang vorgesehenen Rippen 7 als Gußteil oder aus Sintermetall hergestellt. Wegen der erforderlichen Festigkeit kommt bei Verwendung von Grauguß solcher mit einer Zugfestigkeit von mindestens 250 N/mm$^2$ in Betracht. Der Innentopf 2 wird in die Gußform für den Scheibenkranz 3 eingelegt, und es erfolgt im sogenannten Verbundgießverfahren das Gießen des Scheibenkranzes 3, wodurch die Rippen 7 des Innentopfes 2 zwischen den Reibringen 4 und 5 in den Scheibenkranz 3 eingegossen werden.

Fig. 2 zeigt einen Schnitt längs der Linie II-II in Fig. 1. Aus dieser Darstellung ist ersichtlich, daß die Rippen 7 des Innentopfes 2 bis an die Unterkante der Stege 6 reichen. In dem Ausführungsbeispiel ist unter jedem zweiten Steg 6 eine Rippe 7 vorgesehen. Im Bereich unterhalb der Stege, die in der Lücke zwischen zwei Rippen 7 angeordnet sind, weist der Reibring 5 je eine radial nach innen gerichtete Wölbung 9 auf, die in je eine entsprechende Vertiefung zwischen zwei benachbarten Rippen 7 des Innentopfes 2 greift. Auf diese Weise wird eine formschlüssige Verbindung in Drehrichtung der Bremsscheibe 1 erreicht, wodurch eine sehr hohe Drehmomentübertragung gewährleistet ist.

In Fig. 3 ist ein Schnitt längs der Linie III-III in Fig. 2 in vergrößerter Darstellung gezeigt. Der Innentopf 2 weist an seinem Außenumfang im Bereich zwischen den Rippen 7 zusätzlich zu der Schrägfläche 8 noch eine weitere Schrägfläche 10 auf, die durch die Wölbung 9 gebildet und so angeordnet ist, daß sich der von der Drehachse am weitesten entfernt liegende Punkt 11 annähernd in der Mitte der axialen Dicke des Reibringes 5 befindet.

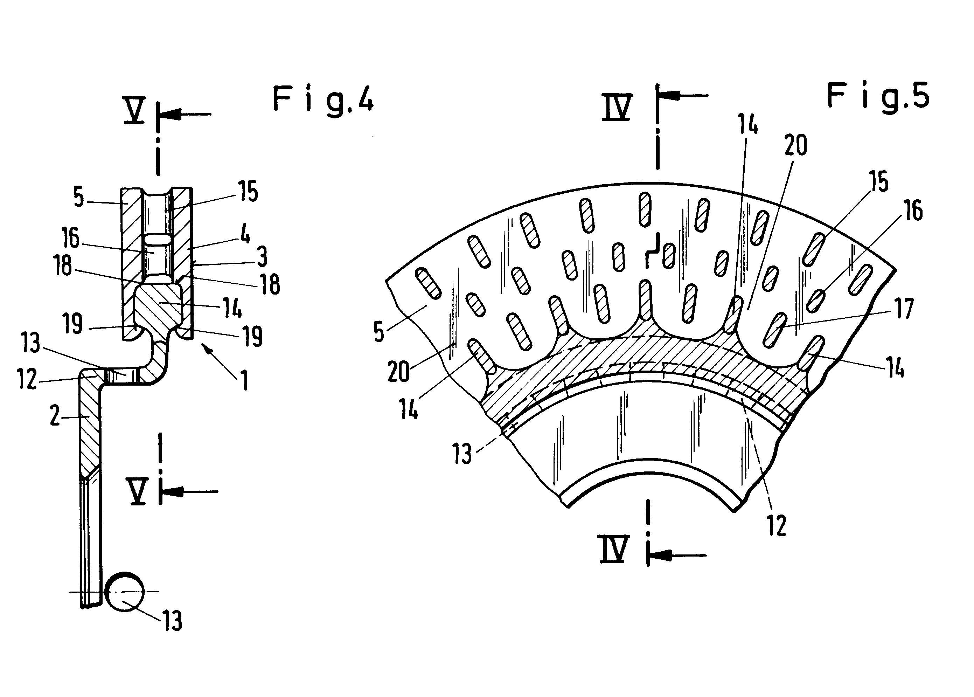

In Fig. 4 ist ein radialer Schnitt durch eine Bremsscheibe 1 gezeigt, bei der der Innentopf 2 in einem zylindrischen Abschnitt 12 mehrere in radialer Richtung den zylindrischen Abschnitt durchsetzende Bohrungen 13 aufweist. Durch diese Bohrungen 13 ist eine gute Belüftung des Innentopfes 2 gegeben, wodurch eine bessere Wärmeabfuhr möglich ist. An dem Außenumfang weist der Innentopf 2 radial nach außen gerichtete Rippen 14 auf, auf denen der Scheibenkranz 3 mittels Verbundgießen befestigt ist. Der Scheibenkranz 3 umfaßt zwei Reibringe 4 und 5, die über eine Vielzahl von in unterschiedlichen Abständen zur Drehachse angeordnete Stege 15, 16, 17 miteinander verbunden sind. Die Reibringe 4 und 5 umgreifen die Rippen 14 derart, daß ein Formschluß sowohl an einer radial außen liegenden Fläche 18 als auch an einer radial innen liegenden Fläche 19 gegeben ist. Die Herstellung der Bremsscheibe 1 gemäß Fig. 4 erfolgt auf die gleiche Weise, wie bereits zur Fig. 1 beschrieben.

Fig. 5 zeigt einen Schnitt längs der Linie V-V in Fig. 4. Diese Darstellung zeigt einen Ausschnitt des Reibringes 5 mit einem Schnitt durch die Stege 15, 16 und 17, die auf unterschiedlichen radialen Abständen zur Drehachse angeordnet sind. Radial innerhalb des Reibringes 5 ist der zylindrische Abschnitt 12 des Innentopfes mit den Bohrungen 13 (gestrichelte Linie) ersichtlich. Von dem zylindrischen Abschnitt 12 ragen die Rippen 14 radial nach außen in Zwischenräume 20, die zwischen zwei benachbarten Stegen 17 im radial inneren Bereich zwischen den Reibringen 4 und 5 gebildet sind. Durch eine entsprechende Formgebung übernehmen die Rippen 14 die Funktion der in den Zwischenräumen 20 fehlenden Stege 17.

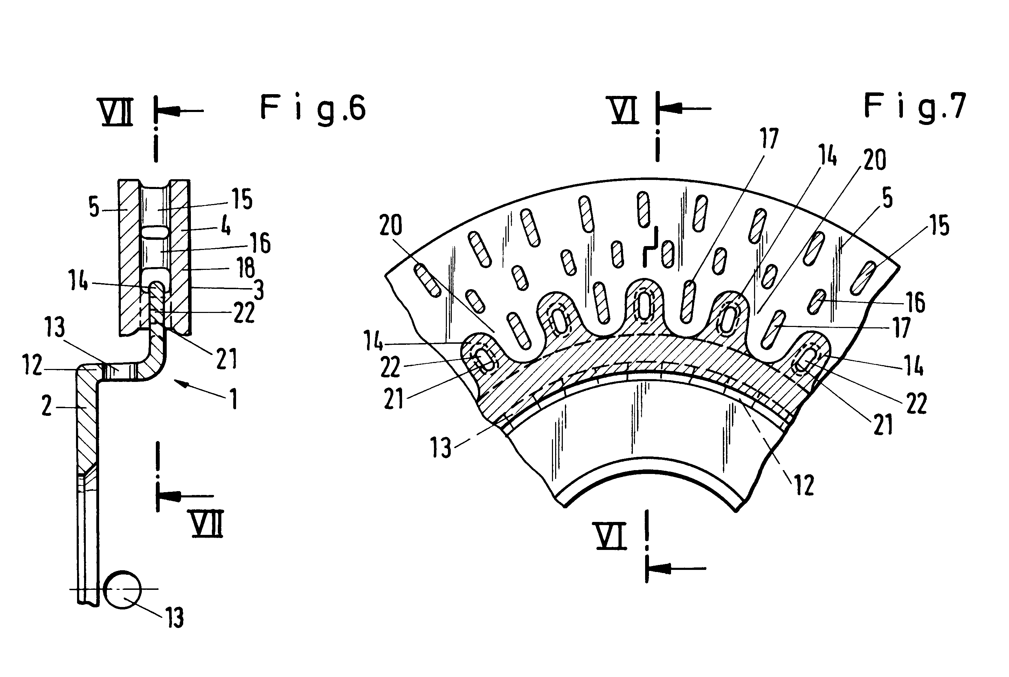

In Fig. 6 ist ein radialer Schnitt durch eine Bremsscheibe 1 gezeigt, die im wesentlichen mit den Merkmalen der Fig. 4 übereinstimmt, so daß auf die Beschreibung zu Fig. 4 Bezug genommen wird. Unterschiedlich ist jedoch die Verankerung des Scheibenkranzes 3 auf dem Innentopf 2, denn in Fig. 6 weisen die Rippen 14 parallel zur Rotationsachse verlaufende Öffnungen 21 auf. Beim Verbundgießen fließt das Material des Scheibenkranzes 3 in diese Öffnungen 21, wodurch Verankerungsstege 22 gebildet werden, die die Rippen 14 durchgreifen.

Fig. 7 zeigt einen Schnitt längs der Linie VII-VII in Fig. 6, wobei in dieser Darstellung ein Ausschnitt des Reibringes 5 zu sehen ist. Für gleiche Teile stimmen die Bezugszeichen mit denjenigen der Fig. 5 überein. Aus dieser Darstellung ist die Form der Öffnungen 21 ersichtlich, die im Ausführungsbeispiel als Langloch gestaltet sind. In den Öffnungen 21 befinden sich die Verankerungsstege 22.

**Patentansprüche**

1. Bremsscheibe (1) für Scheibenbremsen, insbesondere für Kraftfahrzeuge, mit einem mindestens einen Reibring (4, 5) umfassenden und aus einem Gußwerkstoff bestehenden Scheibenkranz (3), der auf einem ebenfalls aus einem Gußwerkstoff bestehenden und mit zum Scheibenkranz (3) gerichteten Rippen (7, 14) versehen Innentopf (2) zur Übertragung von dessen Drehmoment, befestigt und in axialer Richtung Festgelegt ist,
dadurch gekennzeichnet, daß der Innentopf (2) aus einem Material mit höherer Zugfestigkeit besteht als das Material des Scheibenkranzes (3), und daß der Scheibenkranz (3) mittels Verbundgießen auf den Rippen (7, 14) des Innentopfes (2) befestigt ist, wobei das Material des Scheibenkranzes (3) die Rippen (7, 14) in radialer Richtung formschlüssig verankert.

2. Bremsscheibe nach Anspruch 1,
dadurch gekennzeichnet, daß der Innentopf (2) aus einem Grauguß mit einer Zugfestigkeit von mindestens 250 N/mm$^2$ (GG25), vorzugsweise Grauguß mit einer Zugfestigkeit von 300 N/mm$^2$ (GG30) besteht.

3. Bremsscheibe nach Anspruch 1,
dadurch gekennzeichnet, daß der Innentopf (2) aus einem Grauguß mit Kugelgraphit mit einer Zugfestigkeit von mindestens 400 N/mm$^2$ (GGG40) besteht.

4. Bremsscheibe nach einem der Ansprüche 1 bis 3,
dadurch gekennzeichnet, daß der Scheibenkranz (3) aus einem Material mit hohem Kohlenstoffanteil besteht, vorzugsweise aus Grauguß mit einer Zugfestigkeit von 100 oder 150 N/mm$^2$.

5. Bremsscheibe nach einem der Ansprüche 1 bis 4,
dadurch gekennzeichnet, daß der Scheibenkranz (3) zwei Reibringe (4, 5) umfaßt, die über eine Vielzahl in axialer Richtung verlaufender Stege (6, , 15, 16, 17) verbunden sind, und die Rippen (7, 14) des Innentopfes (2) in Schlitze (20) zwischen den sich gegenüberliegenden Reibringen (4, 5) ragen.

6. Bremsscheibe nach Anspruch 5,
dadurch gekennzeichnet, daß ein Reibring (4) des Scheibenkranzes die Rippen (7) umgreift und der andere Reibring (5) radial nach innen auf dem Innentopf (2) abgestützt ist.

7. Bremsscheibe nach Anspruch 5,
dadurch gekennzeichnet, daß beide Reibringe (4, 5) die Rippen (14) umgreifen.

8. Bremsscheibe nach einem der Ansprüche 1 bis 7,
dadurch gekennzeichnet, daß über den Kreisumfang verteilt zwanzig Rippen (7, 14) vorgesehen sind, die durch Verbundgießen in dem Material des Scheibenkranzes (3) eingelagert sind.

9. Bremsscheibe nach Anspruch 6,
dadurch gekennzeichnet, daß der Reibring (5), der sich radial nach innen auf dem Innentopf (2) abstützt, zwischen zwei benachbarten Rippen (7) radial nach innen gerichtete Wölbungen (9) aufweist, die in entsprechende Vertiefungen im Innentopf (2) eingreifen.

10. Bremsscheibe nach Anspruch 5,
dadurch gekennzeichnet, daß die Rippen (14) mit achsparallelen Öffnungen (21) versehen sind, durch die Verankerungsstäbe (22) des Scheibenkranzes (3) greifen.

11. Bremsscheibe nach Anspruch 1,
dadurch gekennzeichnet, daß der Innentopf (2) aus Sintermetall besteht.

**Claims**

1. Brake disc (1) for disc brakes, in particular for motor vehicles, with a disc rim (3) consisting of a cast material and comprising at least one friction ring (4, 5), which disc rim (3) is attached to an inner cup (2) likewise consisting of a cast material and provided with ribs (7, 14) directed towards the disc rim (3), for transmitting its torque and is fixed in the axial direction,
characterised in that the inner cup (2) consists of a material having a higher tensile strength than the material of the disc rim (3), and that the disc rim (3) is attached by means of composite casting to the ribs (7, 14) of the inner cup (2), the material of the disc rim (3) anchoring the ribs (7, 14) positively in the radial direction.

2. Brake disc according to Claim 1,
characterised in that the inner cup (2) consists of a grey cast-iron with a tensile strength of at least 250 N/mm$^2$ (GG25), preferably grey cast-iron with a tensile strength of 300 N/mm$^2$ (GG30).

3. Brake disc according to Claim 1,
characterised in that the inner cup (2) consists of a grey cast-iron with spheroidal graphite with a tensile strength of at least 400 N/mm$^2$ (GGG40).

4. Brake disc according to one of Claims 1 to 3,
characterised in that the disc rim (3) consists of a material with a high proportion of carbon, preferably of grey cast-iron with a tensile strength of 100 or 150 N/mm$^2$.

5. Brake disc according to one of Claims 1 to 4,
characterised in that the disc rim (3) comprises two friction rings (4, 5), which are connected by a plurality of webs (6, 15, 16, 17) extending in the axial direction and the ribs (7, 14) of the inner cup (2) project into slots (20) between opposing friction rings (4, 5).

6. Brake disc according to Claim 5,
characterised in that one friction ring (4) of the disc rim engages around the ribs (7) and the other friction ring (5) is supported radially towards the inside on the inner cup (2).

7. Brake disc according to Claim 5,
characterised in that both friction rings (4, 5) engage around the ribs (14).

8. Brake disc according to one of Claims 1 to 7,
characterised in that twenty ribs (7, 14) are provided distributed over the circumference, which ribs are embedded in the material of the disc rim (3) by composite casting.

9. Brake disc according to Claim 6,
characterised in that the friction ring (5), which is supported radially towards the inside on the inner cup (2), comprises between two adjacent ribs (7), curvatures (9) directed radially inwards, which engage in corresponding recesses in the inner cup (2).

10. Brake disc according to Claim 5,
characterised in that the ribs (14) are provided with axis parallel openings (21), through which anchoring ties (22) of the disc rim (3) engage.

11. Brake disc according to Claim 1,
characterised in that the inner cup (2) consists of sintered metal.


## Revendications

1. Disque de frein (1) pour freins à disques, en particulier pour des véhicules automobiles, comprenant une couronne de disque (3) avec au moins un anneau de friction (4, 5) et constituée d'un matériau de moulage, qui est fixée et bloquée dans le sens axial sur un pot intérieur (2) également constitué d'un matériau de moulage, muni de nervures (7, 14) dirigées vers la couronne de disque (3) et destiné à la transmission du couple de rotation de ladite couronne de disque,
caractérisé en ce que le pot intérieur (2) est réalisé dans un matériau dont la résistance à la traction est supérieure à celle du matériau de la couronne de disque (3), et que la couronne de disque (3) est fixée par coulée composite sur les nervures (7, 14) du pot intérieur (2), le matériau de la couronne de disque (3) bloquant les nervures (7, 14) à engagement positif dans la direction radiale.

2. Disque de frein selon la revendication 1,
caractérisé en ce que le pot intérieur (2) est constitué d'une fonte grise avec une résistance à la traction d'au moins 250 N/mm$^2$ (GG25), de préférence de fonte grise avec une résistance à la traction de 300 N/mm$^2$ (GG30).

3. Disque de frein selon la revendication 1,
caractérisé en ce que le pot intérieur (2) est constitué d'une fonte grise à graphite sphéroïdal avec une résistance à la traction d'au moins 400 N/mm$^2$ (GGG40).

4. Disque de frein selon l'une des revendications 1 à 3,
caractérisé en ce que la couronne de disque (3) est constituée d'un matériau à forte teneur en carbone, de préférence de fonte grise avec une résistance à la traction de 100 ou 150 N/mm$^2$.

5. Disque de frein selon l'une des revendications 1 à 4,
caractérisé en ce que la couronne de disque (3) comprend deux anneaux de friction (4, 5) qui sont reliés entre eux par l'intermédiaire d'un grand nombre de barrettes (6, 15, 16, 17) s'étendant dans la direction axiale, et que les nervures (7, 14) du pot intérieur (2) dépassent dans des fentes (20) entre les anneaux de friction (4, 5) disposés en face l'un de l'autre.

6. Disque de frein selon la revendication 5,
caractérisé en ce qu'un anneau de friction (4) de la couronne de disque enveloppe les nervures (7) et que l'autre anneau de friction (5) s'appuie radialement vers l'intérieur sur le pot intérieur (2).

7. Disque de frein selon la revendication 5,
caractérisé en ce que les deux anneaux de friction (4, 5) enveloppent les nervures (14).

8. Disque de frein selon l'une des revendications 1 à 7,
caractérisé en ce qu'il comprend vingt nervures (7, 14) réparties sur la circonférence lesquelles sont encastrées par coulée composite dans le matériau de la couronne de disque (3).

9. Disque de frein selon la revendication 6,
caractérisé en ce que l'anneau de friction (5) qui s'appuie radialement vers l'intérieur sur le pot intérieur (2), présente entre deux nervures (7) voisines des courbures (9) dirigées radialement vers l'intérieur et s'engageant dans des creux correspondants dans le pot intérieur (2).

10. Disque de frein selon la revendication 5,
caractérisé en ce que les nervures (14) sont munies d'ouvertures (21) parallèles à l'axe, qui sont traversées par des baguettes d'ancrage (22) de la couronne de disque.

11. Disque de frein selon la revendication 1, caractérisé en ce que le pot intérieur (2) est en métal fritté.

Fig.1

Fig.2

Fig.3

EP 0 352 502 B1

Fig.5

Fig.4

Fig.6

Fig.7

VII

VI

5
15
4
16
18
3
22
21
14
13
12
2
1
13

VII

17
14
20
20
5
15
16
17
14
22
21
14
22
21
13
12

VI

EP 0 352 502 B1